# EUROPEAN PATENT SPECIFICATION

(11) **EP 3 411 619 B1**
(45) Date of publication and mention of the grant of the patent: **07.06.2023**
(21) Application number: 17702090.6
(22) Date of filing: 30.01.2017
(51) Int. Cl.: F16L 59/02, F24F 13/02

(54) **MAT SHAPED INSULATION MATERIAL ELEMENT, PACKAGING FOR THE INSULATION MATERIAL ELEMENTS AND METHOD FOR PRODUCING THE PACKAGING**
MATTENFÖRMIGES DÄMMSTOFFELEMENT, VERPACKUNG FÜR DIE DÄMMSTOFFELEMENTE UND VERFAHREN ZUR HERSTELLUNG DER VERPACKUNG
ÉLÉMENT EN MATIÈRE ISOLANTE EN FORME DE NAPPE, EMBALLAGE POUR ÉLÉMENTS EN MATIÈRE ISOLANTE ET PROCÉDÉ DE FABRICATION DE L'EMBALLAGE

(30) Priority: 04.02.2016 DE 102016101953
(43) Date of publication of application: 12.12.2018
(73) Proprietor: SAINT-GOBAIN ISOVER, 92400 Courbevoie (FR)
(72) Inventor: SCHULZ, Christian, 19386 Passow (DE)
(74) Representative: Bockhorni & Brüntjen Partnerschaft Patentanwälte mbB
(86) International application number: PCT/EP2017/051910
(87) International publication number: WO 2017/134004

(56) References cited:
- EP-A1- 0 290 677
- EP-A1- 1 175 538
- EP-A1- 2 182 269
- DE-A1- 10 039 859
- FR-A1- 2 581 685
- GB-A- 1 132 089
- GB-A- 1 137 121
- US-A- 5 817 387

## Description

The invention relates to mat type insulation material element, a packaging, in particular configured as a roll for a mat type wire mesh insulation material web and a method for producing the packaging.

Wire mesh insulation material elements made from mineral wool are generally known in the art and are typically used for technical insulation and are mostly used for thermal insulation of pipes, ventilation ducts, and reactors and similar but also for sound and fire protection. Wire mesh mats have many uses thus also for containers and drying plants, combustion plants, power plant boilers, naval construction and similar wherein the wire mesh mats are typically used in a form of packaged rolls. This field is typically designated as "technical insulation".

An insulation element with a wire grid web is shown in FR 2 581 685. This insulation element is ready-made for a rectangular chimney and therefore forms a pre-fabricated element which is used as such for insulating the chimney whereby a given number of four insulation boards is arranged on the wire grid web with a defined distance by aligning intermediate elements in between the insulation boards. The distance between the insulation elements has to be identical to the height of the insulation boards and cannot be varied because the insulation boards are to be arranged flush around the chimney. Further similar insulation elements for chimneys that are pre-fabricated are described in GB 1 132 089 A, DE 100 39 859 A1 and GB 1 137 121 A. EP 0 290 677 A1 discloses similar insulation elements, however, for pipes with V-shaped incisions.

US 5,817,387 provides a modularized encapsulated insulation assembly for the insulation of cavities and building structures such as walls, sealings, floors and roofs including spaced-apart framing members. The modularized insulation assembly can be separated into two or more insulation modules to insulate building structures. All those structural elements, however, have in common a rectangular angled form.

In particular for enveloping hot pipes and for ventilation ducts wire mesh mats including mineral wool and a wire mesh, advantageously a large grid wire mesh is used since a binder can disintegrate in a portion of the thermal insulation that is close to the hot tubing wherein an adherence of the fibers is lost from an inside to an outside so that a corresponding structural stability is reached due to a wire mesh covering of the mineral wool. Rock wool is used in particular as the mineral wool and in particular when tubing in a higher temperature range shall be insulated, this means tubular conductors with temperatures up to 500° C to 600° C. In case of lesser requirements with respect to temperature resistance glass wool can also be used.

Thus, wire mesh insulation material elements configured as wire mesh or wire net mats are used in particular for a thermal insulation of tubes in a diameter range of approximately 100 - 500 mm or above, wherein conventional tubular shelves made from mineral wool are typically used for smaller tube diameters.

Thus, it is known in the art to adapt a length of the wire mesh mat already to a circumference of the tubing to be insulated, wherein however a cutting to shorter lengths has disadvantages. Since in particular in Scandinavian countries also tubular conduits with smaller tube diameters are insulated with wire mesh mats installers also need very short wire mesh mat pieces? These short pieces can only be wound up with great difficulty and there is in particular a problem of pressing the packaging, wherein a corresponding compression is certainly important for logistical reasons.

Thus, it is an object of the invention to provide a mat type insulation material element made from mineral wool which is suitable in particular for thermal insulation of tubular conduits and which facilitates simple handling and mounting. It is another aspect of the invention to simplify a production of insulation material elements of this type which are configured with wire grid or wire mesh in order to keep logistics expenses for transportation and storage favorable.

This object is achieved according to the invention for a mat type insulation material element through the features of claim 1, for a packaging in particular wound up into a roll by the features of claim 6 and for the method through the measures of claim 13, wherein advantageous embodiments are respectively derived from the features of the dependent claims.

According to the invention a mat type insulation material element with a wire grid is provided which is provided through a separation cut with individual mineral wool mats that are individualized and arranged with gaps there between on at least one advantageously continuous wire mesh grid wherein the separation cut for individualizing the mats is provided in a portion of a gap between the mats, in particular between adjacent mats. Thus on the one hand side the wire mesh insulation material mats can be delivered in a very simple manner and can be formed on site through a separation cut at a level of the gap between the mineral wool mats arranged behind one another with the gap there between, wherein the separation cut can be provided so that protruding over lapping portions of the wire grid remain. The separation cut is performed at one end face of the mats in the wire grid web so that only a one sided protruding overlapping portion is formed for the individualized mineral wool mat so that the overlapping portion reaches over during enveloping a tubular conduit with a mat type insulation material element so that two faces of the mineral wool insulation element contact each other which is advantageous for assembly.

The insulation material elements are advantageously delivered in a roll which only has to be unwound on site. An installer only has to cut the wire mesh which is possible on site in a simple manner so that no cut off is provided on the construction site due to unfavorable mat lengths so that less waste is provided on the construction site. There is also no waste through the required overlap of wire mesh wherein depending on the location of the separation cut in the portion of the gap different overlap conditions can be provided. In case of the separation cuts proximal to or at the face ends of the insulation elements the installer can still cut off a short end piece of the mineral wool and remove it so that also for a separation cut of this type a small amount of wire mesh protrudes at the mat beginning and at the mat end. Overall this yields a quicker installation of the insulation, in particular when used for thermal insulation of tubular conduits.

Thus, it is an object of the invention to provide an insulation material web, in particular a packaging configured as wire grid insulation material web wound into a roll which is configured by arranging mineral wool mats with a gap from each other on a wire grid so that insulation material elements are individualized by a separation cut.

Producing a packaging of this type is simply provided in that a mineral wool mat is already cut to a corresponding length by the production machine. Between the individual mat elements a gap is drawn to that the mats are placed at a distance from each other with their faces. The individual pieces are thus combined in to a wind able web after being cut apart by using the wire mesh and the individual pieces are arranged at a predetermined distance from each other and thus at a gap from each other. After the stepping machine the insulation material web thus formed made from mineral wool mats arranged with a gap between each other and a continuous wire mesh web optionally with an aluminum foil laminated there between is separated in one of the gaps and the insulation material webs thus formed with the individual mineral wool elements are wound up to form a roll.

Advantageously cutting off in the n-th gap is performed directly at one of the two face ends of the mineral wool mats so that with respect to the roll advantageously a one sided overlap portion is formed at the first or at the last mat. For the wind up it is thus preferred with the overlap portion of the cut off is provided at a trailing edge of the insulation material web so that the cut off is arranged in an outside of the roll.

Thus, it has proven advantageous for a packaging roll to use 4 - 7 mineral wool elements or insulation material elements on one web so that after unwinding the roll on site a corresponding number of individual insulation elements can be formed by corresponding separation cuts.

Regarding the individual insulation material elements the separation cuts can be selected accordingly with gaps which can be performed by the installer on site as required. In case a length of the mineral wool mats on the wire mesh is not totally ideal for wrapping the tubular conduits, the individual insulation material element can certainly also be divided on site accordingly, in case a protruding wire mesh at a face or at both faces is advantageous an end section of the cut mineral wool mat can also be cut off as required. Thus independently from the lengths of the mineral wool mats sized accordingly for each packaging any cut can be performed in a simple manner, and thus in adaptation to the tubular conduits to be insulated. In so far the invention is particularly advantageous for direct application on construction sites because typically tubular conduits with different tube diameters have to be thermally insulated.

A suitable connection between the mineral wool mat optionally with an aluminum foil laminated there between and the wire grid is performed by stitching. This is particularly suitable for the invention because a stitching can also be provided proximal to the respective face of the mineral wool mat and thus of the finished or individualized insulation material element which is particularly suitable for the fiber interconnection in the edge portion after deployment. In case of an aluminum foil lamination blackened aluminum foils can be used in addition to silver aluminum foils wherein the blackened aluminum foils are less conspicuous. A typical application are detached air ducts which shall be covered optically.

Depending on the respective separation cut in the gap between the face sides of adjacent mineral wool mats and a corresponding size of the distance or the gap the portion of the wire grid protruding beyond the face end of the mineral wool mats can be selected and determined accordingly so that the protruding portion overlaps when the insulation material element is installed around the tubular conduit with butt joints of the ends of the mineral wool mat. Thus a protruding portion of the wire grid optionally also of the aluminum foil arranged there between is in a range of 25 - 200 mm, in particular in a range of 50 - 125 mm but it can also be below the value of 25 mm which can be determined by the installer according to the application through cutting off the protruding portion.

Suitable raw thicknesses for the insulation material element according to the invention are in a range of 20 - 100 kg/m³ , in particular 30 - 80 kg/m³ , in particular 35 - 70 kg/m³, wherein suitable raw density values in practical applications are 40, 48, 55 or 66 kg/m³.

The thickness of the mineral wool mats and also in principle also the thickness of the wire insulation material elements is in a range of 30 - 120 mm, in particular in a range of 30 - 75 mm, wherein an advantageous thickness is 50 mm.

The length of the individual pieces is eventually a function of the components to be insulated like e.g. tubes. Thus lengths of the mineral wool mats or of the individual insulation material elements are in a range of 800 - 1700 mm, advantageously in a range of 800 - 1600 mm, wherein a length limitation is not mandatory in upward and in downward direction. Eventually this is also a function of the line speed of the plant on which the roll for forming the packaging is produced in particular also a function of the cut off sheer which can only perform a certain number of strokes per minute. With respect to the length of the mineral wool mat, this yields a limitation to a length of 5000mm for practical reasons since the next practical role length is approximately 11 - 12 meters, thus pieces of 5000 mm in a roll can be easily produced on conventional machines.

In the subsequent table practical numbers with respect to tube diameter, mat length and number of mats per roll and the roll length are provided wherein the term mat length applies for the length of the mineral wool mat and not for the length of the roll.

**Table 1**

| Tube Diameter [mm] | Mat Length [mm] | Number/Roll | Roll Length [mm]^{∗} |
|---|---|---|---|
| 165 | 833 | 7 | 6531 |
| 185 | 895 | 7 | 6965 |
| 205 | 958 | 6 | 6348 |
| 225 | 1021 | 6 | 6726 |
| 250 | 1100 | 5 | 6000 |
| 305 | 1272 | 5 | 6860 |
| 315 | 1304 | 5 | 7020 |
| 355 | 1429 | 4 | 6116 |
| 385 | 1524 | 4 | 6496 |
| 405 | 1587 | 4 | 6748 |

| | | | |
|---|---|---|---|
| ^{∗}) For a gap width of 100 mm | | | |

According to the table for example for seven mineral wool mats on a roll or a continuous wire grid web per roll at a length of the mineral wool mat of 833 mm a suitable dimension of the packaging for winding around tubular conductors with a tube diameter of 165 mm is achieved, wherein seven individual insulation material elements can be formed from the roll which facilitate thermally insulating a tubular conductor with a length of 4,200 mm for a roll width of 600 mm. The values illustrated in the table depicted supra refer to a product with a raw density of 66 kg/m³ and thickness of 50 mm at a roll width of 600 mm.

This certainly does not yield any limitation with reference to mat length, number in the roll and the other parameters.

Advantageously the distance between the mineral wool elements arranged with a gap between each other of the insulation material web is in a range of 50 - 400 mm, advantageously in a range of 100 - 250 mm. The clear distance between the mineral wool elements can be selected according to the thickness of the product and the line velocity of the production system.

Producing an insulation material web that is suitable to be wound up in a roll packaging is advantageously provided in that a conventionally produced mineral wool web of a suitable thickness and raw thickness is cut to predetermined lengths and the mats thus cut are then pulled to form a face gap between each other in the longitudinal direction of the mineral wool mats. Thereafter the stitching with the wire mesh is performed and also of the aluminum foil lamination arranged there between so that the individual mineral wool elements placed with a gap relative to each other are then fixated with a respective distance from each other on the wire grid after running through the stitching machine. After running through the stitching machine the insulation material web thus produced with individual mineral wool mats arranged thereon are separated in each x-th gap and the pieces of the mineral wool mats thus connected by the wire grid are wound into a roll under compression.

For a compression a ratio of 1:2 to 1:3, advantageously 1:2.3 to 1: 2.7 is suitable. Circular tubes are the main application for the invention thus tubes or conductors with a circular cross section. The invention is also useable for tubes and conductors with other cross section, in particular a rectangular or square cross section.

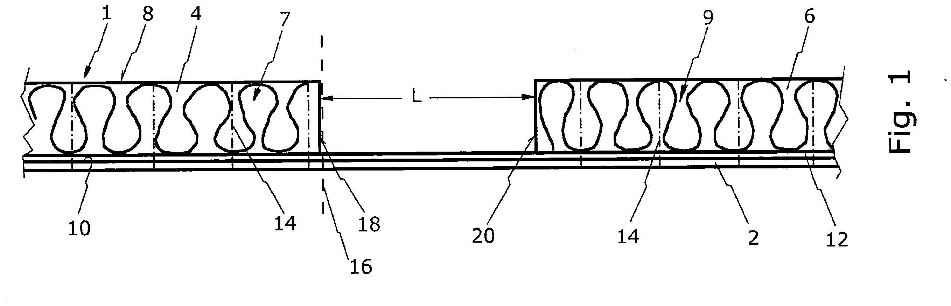

Subsequently an advantageous embodiment is described in a purely exemplary manner based on the only figure which represents a cross section through an insulation material element web according to the invention with individual elements.

In detail the figure illustrates a sectional view through a wire grid insulation element 1 including a wire grid web 2 with individual mineral wool mats 4, 6 arranged thereon with a gap L arranged there between in order to describe and illustrate the insulation material elements 7, 9 according to the invention, the packaging according to the invention advantageously provided as a roll and the method for producing the insulation material elements 7, 9 or the packaging.

It is appreciated that the illustration is purely exemplary and the features illustrated and described in a context with this purely exemplary embodiment are certainly not limited to this special embodiment but are also useable for other embodiment according to the invention as defined in the claims.

Each insulation material element 7, 9 is formed by itself according to the illustrated embodiment from a mineral wool mat 4 or 6 and a wire grid arranged thereon on one of the two main surfaces, these are the surfaces 8 or 10 which are illustrated in the figure by the overall continuous wire grid web 2.

The mineral wool mats 4, 6 include two opposite main surfaces 8 or 10 which form an overall cuboid structure together with the main surfaces in the illustrated advantageous embodiment the wire grid is only arranged on one of the two main sides thus on the main surface 10. Herein it is irrelevant whether the cross sectional view illustrated in the figure is arranged as illustrated or rotated by 180°due to the manufacturing method employed.

Between each mineral wool mat 4 or 6 and the wire grid web 2 a continuously configured aluminum foil 12 is illustrated which is laminated onto the respective mineral wool mat 4 or 6.

The aluminum foil lamination can be blank or colored, in particular colored black. The mineral wool mat 4 or 6 is stitched to the wire grid in a known manner which is performed by typical stitching machines. The stitching seams are only indicated in an exemplary manner thus by dashed dotted lines 14.

In order to form the insulation material element 7, 9 itself the web between the mineral wool mats 4 or 6 placed with a gap L from one another is separated by a separation cut thus according to the dashed line 16, so that separated and thus individual insulation material elements 4 or 6 can be formed. Thus the arrangement of the separation cut 16 performed according to the figure proximal to or at the face 18 of the mineral wool mats 4 is purely exemplary, since the separation cut can be performed in principle at any point of the gap.

In case of the illustrated separation cut for the face arrangement, thus at the end 18 of the mineral wool mats there is a corresponding overhang of the aluminum lamination 12 and of the wire grid 2 which protrude in the individual insulation material element on one side beyond the rear face 20 of each mineral wool mat which is advantageous for mounting in particular because then only this one protruding portion during wrapping over the pipes can be applied over the overlapping joint so that two overlaps do not interfere with each other.

The type and configuration of the separation cut or of the separation cuts is within the discretion of a person skilled in the art and is then selected based on the corresponding application.

The advantageous one sided overlap of the first mineral wool mat after unfurling the roll is in practical applications defined by the arrangement of the separation cuts.

In the illustrated embodiment not only the wire grid web 2 is configured continuous but also the aluminum lamination 12 which however when required can also be configured an arranged according to the respective length of the mineral wool mats. From a manufacturing point of view however a continuous configuration of an aluminum foil 12 is useful.

The web-like insulation element 1 thus configured formed from at least one continuous wire grid web 2 and thereon mineral wool mats 4, 6 that are arranged with a gap there between and thus spaced apart from each other, in the instant embodiment also with an aluminum foil lamination 12 arranged there between is suitable for producing a packaging, in particular in the form of a roll for supplying the insulation material web with the individual insulation material elements 7, 9 which can then be cut to size on site.

Thus, the insulation material web illustrated in the figure which typically includes more than two of the illustrated mineral wool mats is wound into the roll under compression, wherein advantageously the large grid wire mesh or wire grid is on top in the roll which is advantageous. The degree of compression in the embodiment is 1:2.5.

Thus, so to speak in a packaging configured as a roll delivering the plural insulation material elements 7, 9 can be performed in the form of a wound insulation material web, wherein the corresponding insulation material elements 7, 9 are then formed on site by the mineral wool mat 4 or 6, the wire grid and optionally the aluminum lamination is provided by a separation cut in the portion of the gap L this is very simple since typically only the wire grid and optionally the aluminum lamination have to be cut through. The separation cut can then be advantageously selected at will in the portion of the gap L, wherein a separation cut proximal to or directly at one of the faces 18 or 20 is advantageous.

For a wire fabric or wire grid a large grid wire mesh is suitable that is commercially available and which is also used for conventional wire grid insulation material elements. In the illustrated embodiment a length of each mineral wool mat 4 or 6 is 1524 mm at a gap spacing of 100 mm so that the length of the roll is 6496 mm, thus approximately 6500 mm which corresponds to the typical plants for producing mineral wool webs which are configured for lengths up to 12 m or slightly above. Herein it is considered that the wire mesh overall overlaps relative to the first and fourth mat by a gap spacing.

The raw density in the illustrated embodiment is for example 66 kg/m³ and a width of the insulation material element of 600 mm and a thickness off mineral wool mat 50 mm. Rock wool is advantageously used as mineral wool in particular for applications in high temperature ranges thus for insulation tubes in a temperature range of up to 500° C or 600° C. Otherwise also glass wool can be used.

Producing the insulation material web as illustrated in the figure is performed in that a mineral wool web with the respective thickness, width and with corresponding raw density is produced in a convention manner and thus as an endless web which is then cut into a suitable length of the mineral wool mats as they are being used. The mineral wool mats are then placed onto the wire grid web 2 which can either be performed already individualized in that they are placed between the faces onto the wire mesh or the mineral wool web by itself is pulled apart to form the gap.

In case of an aluminum lamination the aluminum foil is already provided on the wire grid web.

The insulation material web thus configured including wire mesh, optionally aluminum foil and mineral wool mats placed thereon which are arranged or pulled with a gap between each other are then run through a typically stitching machine, wherein the stitching between the mineral wool mat and the wire mesh is performed in the stitching machine.

Thereafter the stitched mineral wool insulation material web is wound into a roll for forming the transport packaging.

It is appreciated that the invention is not limited to stitching and that any other connection between wire grid or wire mesh and mineral wool is suitable.

## Claims

1. A mat shaped mineral wool insulation element (7, 9), comprising a mineral wool mat (4, 6) which includes a wire grid (2) at least on one main surface of the mineral wool mat (4, 6), wherein
the insulation material element (7, 9) includes a mineral wool mat (4 or 6) made from a plurality of mineral wool mats (4, 6) that are individualized and arranged on at least one wire grid web (2) with a gap (L) or space between end faces of the mineral wool mats (4, 6), wherein the mineral wool mats (4, 6) are connected with one another by the wire grid web (2),
**characterized in that**
the insulation material element (7, 9) is formed by a separation cut through the wire grid web (2) in the portion of the gap (L) which separation cut is performed at one end face (18) of the mineral wool mats (4, 6) in the wire grid web (2) so that only a one sided protruding overlapping portion is formed for the individualized mineral wool mat (4, 6).

2. The insulation material element (7, 9) according to claim 1,
**characterized in that**
the mineral wool mat (4, 6) is covered on its entire surface by the wire grid (2) which is advantageously stitched together with the mineral wool mat (4, 6).

3. The insulation material element (7, 9) according to claim 1 or 2,
**characterized in that**
the mineral wool mat (4, 6) is provided on one side, this means only on one of its main surfaces (8 or 10) with the wire grid (2), wherein the mineral wool mat (4, 6) is advantageously laminated with an aluminum foil (12) on a surface provided with the wire grid.

4. The insulation material element (7, 9) according to one of the claims 1 to 3,
**characterized in that**
the overhang of the protruding overlapping portion is in a range of 25 - 200 mm, in particular 50 - 125 mm.

5. The insulation material element (7, 9) according to one of the preceding claims,
**characterized in that**
the mineral wool mat (4 or 6) has a thickness in a range of 20 to 120 mm, in particular 30 to 75 mm, advantageously 30 to 50 mm and /or the length of the mineral wool mat (4 or 6) is in a range of 800 to 5000 mm, in particular in a range of 800 to 1600 mm, and/or the width of the mineral wool mat (4 or 6) is in a range of 50 to 120 mm, in particular 50 - 100mm, advantageously 60 mm, and/or a raw density of the mineral wool mat (4, 6) is in a range of 20 to 100 kg/m³, in particular 30 to 80 kg/m³, advantageously 35 - 70 kg/m³, in particular 40, 48, 55 or 66 kg/m³ .

6. A packaging for insulation material elements (7, 9) according to one of the claims 1-5,
**characterized in that**
the packaging is configured as a roll and made up of an insulation material web comprising the mat shaped mineral wool insulation element (7, 9) according to one of claims 1 to 5 and which is configured to form individualizable insulation material elements (7, 9) in mineral wool mats (4, 6), wherein the mineral wool mats (4, 6) are arranged with gaps (L) at their end faces in the insulation material web and connected with one another with by at least one wire grid web (2) which is arranged advantageously on at least one of the two main surfaces (8, 10) of the mineral wool mats (4, 6).

7. The packaging according to claim 6,
**characterized in that**
the packaging includes an aluminum foil lamination (12) between the individual mineral wool mats (4, 6) and the wire grid web (2) is advantageously stitched together therewith, wherein a length of the aluminum foil is either continuous corresponding to a length of the wire grid web (2) or is sized and configured respectively to a length of each mineral wool mat (4, 6).

8. The packaging according to one of the claims 6 or 7,
**characterized in that**
a length of the wound up roll is in a range of 5 m to 12 m, advantageously 6 to 7 m.

9. The packaging according to one of the claims 6 to 8,
**characterized in that**
a thickness of the mineral wool mats (4, 6) is in a range of 20 - 120 mm, in particular 30 - 75 mm, advantageously 30 - 50 mm and/or that the length of the mineral wool mats (4, 6) is in a range of 800 - 5000 mm, in particular 800 - 1600 mm, and/or that the width of the mineral wool mats (4, 6) is in a range of 50 mm - 120 mm, in particular 50 mm - 100 mm, advantageously 60 mm and that the raw density is in a range of 20 - 100 kg/m³, in particular 30 to 80 kg/m³ and advantageously in a range of 35 - 70 kg/m³, wherein particularly suitable raw densities are 40, 48, 55, and 66 kg/m³.

10. The packaging according to one of the preceding claims,
**characterized in that**
the gap (L) between the mineral wool mats (4, 6) is in a range of 50 - 400 mm, advantageously in a range of 100 - 250 mm.

11. The packaging according to one of the preceding claims,
**characterized in that**
the mineral wool mats (4, 6) are provided in a quantity of two to eight, in particular four to seven mats on a wire grid web (2).

12. The packaging according to one of the claims 6 - 11,
**characterized in that**
the roll is provided with a compression in a range of 1:2 to 1:3 advantageously 1:2.3 to 1:2.7.

13. A method for producing a packaging according to one of the claims 6 - 12 whereas the mineral wool mats (4, 6) are cut with a predetermined length from a continuous mineral wool web, the mineral wool mats (4, 6) are individualized and placed at a distance from each other and arranged on a wire grid web (2) and that the mineral wool mats (4, 6) arranged with a gap (L) between one another are stitched together with the wire grid web (2) and that the wire grid web (2) together with the mineral wool mats (4, 6) is combined into a packaging configured as a roll, whereas the cut is performed at one end face (18) of the mineral wool mats (4, 6) in the wire grid web (2) so that only a one sided protruding overlapping portion is formed for the individualized mineral wool mat (4, 6).

14. The method according to claim 13,
**characterized in that**
the roll is wound with a compression in a range of 1:2 to 1:3, advantageously 1:2.3 to 1:2.7.

15. The method according to one of the claims 13 or 14,
**characterized in that**
a wire grid web (2) with two to eight, advantageously four to seven, mineral wool mats (4, 6) is wound into a packaging roll.

## Patentansprüche

1. Mattenartiges Mineralwolle-Dämmstoffelement (7, 9), umfassend eine Mineralwollematte (4, 6), welche mindestens auf einer ihrer Hauptflächen ein Drahtgitter (2) aufweist, wobei
das Dämmstoffelement (7, 9) eine Mineralwollematte (4, 6) aus einer Mehrzahl von vereinzelten und stirnseitig auf Lücke (L) bzw. Abstand zueinander auf mindestens einer Drahtgitterbahn (2) angeordneten Mineralwollematten (4, 6) aufweist, die durch die Drahtgitterbahn (2) miteinander verbunden sind,
**dadurch gekennzeichnet, dass**
das Dämmstoffelement (7, 9) über einen Trennschnitt durch die Drahtgitterbahn (2) im Bereich der Lücke (L) gebildet ist, wobei der Trennschnitt an einer Stirnseite (18) der Mineralwollematten (4, 6) in der Drahtgitterbahn (2) so durchgeführt ist, dass nur ein einseitiger vorstehender Überlappungsabschnitt für die vereinzelte Mineralwollematte (4, 6) gebildet ist.

2. Dämmstoffelement (7, 9) nach Anspruch 1,
**dadurch gekennzeichnet, dass**
die Mineralwollematte (4, 6) vollflächig mit dem Drahtgitter (2) überzogen ist, welches vorzugsweise mit der Mineralwollematte (4, 6) versteppt ist.

3. Dämmstoffelement (7, 9) nach Anspruch 1 oder 2,
**dadurch gekennzeichnet, dass**
die Mineralwollematte (4, 6) einseitig, das heißt nur auf einer ihrer Hauptflächen (8 bzw. 10) mit dem Drahtgitter (2) versehen ist, wobei vorzugsweise die Mineralwollematte (4, 6) auf der mit dem Drahtgitter (2) versehenen Fläche mit einer Alufolie (12) kaschiert ist.

4. Dämmstoffelement (7, 9) nach einem der Ansprüche 1 bis 3,
**dadurch gekennzeichnet, dass**
der Überstand des vorstehenden Überlappungsabschnittes im Bereich von 25 bis 200 mm, insbesondere 50 bis 125 mm beträgt.

5. Dämmstoffelement (7, 9) nach einem der vorhergehenden Ansprüche,
**dadurch gekennzeichnet, dass**
die Mineralwollematte (4 bzw. 6) eine Dicke im Bereich von 20 bis 120 mm, insbesondere 30 bis 75 mm, vorzugsweise 30 bis 50 mm aufweist und/oder die Länge der Mineralwollematte (4 bzw. 6) im Bereich von 800 bis 5000 mm, insbesondere im Bereich von 800 mm bis 1600 mm, liegt und/oder dass die Breite der Mineralwollematte (4 bzw. 6) im Bereich von 50 bis 120 mm, insbesondere 50 bis 100 mm, vorzugsweise 60 mm, liegt und/oder dass die Rohdichte der Mineralwollematte (4, 6) im Bereich von 20 bis 100 kg/m³, insbesondere 30 bis 80 kg/m³, vorzugsweise 35 bis 70 kg/m³ liegt, insbesondere geeignet 40, 48, 55 oder 66 kg/m³ beträgt.

6. Gebinde für Dämmstoffelemente (7, 9) nach einem der Ansprüche 1 bis 5,
**dadurch gekennzeichnet, dass**
das Gebinde in Form einer Rolle konfiguriert ist und aus einer Dämmstoffbahn gebildet ist, welche das mattenartige Mineralwolle-Dämmstoffelement (7, 9) umfasst, nach einem der Ansprüche 1 bis 5 und welches so konfiguriert ist, um vereinzelbare Dämmstoffelemente (7, 9) in Mineralwollematten (4, 6) zu bilden, wobei die Mineralwollematten (4, 6) stirnseitig auf Lücke (L) in der Dämmstoffbahn zueinander angeordnet und durch mindestens eine Drahtgitterbahn (2) miteinander verbunden sind, die vorzugsweise auf mindestens einer der beiden Hauptflächen (8, 10) der Mineralwollematten (4, 6) angeordnet ist.

7. Gebinde nach Anspruch 6,
**dadurch gekennzeichnet, dass**
das Gebinde zwischen den vereinzelten Mineralwollematten (4, 6) und der vorzugsweise damit versteppten Drahtgeflechtbahn (2) eine Alufolienkaschierung (12) aufweist, wobei eine Länge der Alufolie entweder durchgehend entsprechend der Länge der Drahtgitterbahn (2) oder jeweils auf die Länge einer jeden Mineralwollematte (4, 6) bemessen und abgestimmt ist.

8. Gebinde nach einem der Ansprüche 6 oder 7,
**dadurch gekennzeichnet, dass**
eine Länge der aufgewickelten Rolle im Bereich von 5 m bis 12 m, vorzugsweise 6 bis 7 m liegt.

9. Gebinde nach einem der Ansprüche 6 bis 8,
**dadurch gekennzeichnet, dass**
eine Dicke der Mineralwollematten (4, 6) im Bereich von 20 bis 120 mm, insbesondere 30 bis 75 mm, vorzugsweise 30 mm bis 50 mm, liegt und/oder dass die Länge der Mineralwollematten (4, 6) im Bereich von 800 bis 5000 mm, insbesondere 800 mm bis 1600 mm, liegt und/oder dass die Breite der Mineralwollematten (4, 6) im Bereich von 50 mm bis 120 mm, insbesondere 50 mm bis 100 mm, vorzugsweise 60 mm, liegt und dass die Rohdichte im Bereich von 20 bis 100 kg/m³, insbesondere 30 bis 80 kg/m³ und vorzugsweise im Bereich von 35 bis 70 kg/m³, liegt, wobei besonders geeignete Rohdichten im Bereich von 40, 48, 55 und 66 kg/m³ sind.

10. Gebinde nach einem der vorhergehenden Ansprüche,
**dadurch gekennzeichnet, dass**
die Lücke (L) zwischen den Mineralwollematten (4, 6) im Bereich von 50 mm bis 400 mm, vorzugsweise im Bereich von 100 bis 250 mm, liegt.

11. Gebinde nach einem der vorhergehenden Ansprüche,
**dadurch gekennzeichnet, dass**
die Mineralwollematten (4, 6) in einer Anzahl von zwei bis acht, insbesondere vier bis sieben Matten, auf einer Drahtgitterbahn (2) vorliegen.

12. Gebinde nach einem der Ansprüche 6 bis 11,
**dadurch gekennzeichnet, dass**
die Rolle mit einer Kompression im Bereich von 1:2 bis 1:3, vorzugsweise 1:2,3 bis 1:2,7 gewickelt ist.

13. Verfahren zur Herstellung eines Gebindes nach einem der Ansprüche 6 bis 12,
**dadurch gekennzeichnet, dass**
die Mineralwollematten (4, 6) mit einer vorbestimmten Länge aus einer durchgehenden Mineralwollebahn geschnitten, diese Mineralwollematten (4, 6) vereinzelt und auf Abstand zueinander gesetzt sowie auf einer Drahtgitterbahn (2) angeordnet werden, und dass die auf Lücke (L) gesetzten Mineralwollematten (4, 6) mit der Drahtgitterbahn (2) versteppt werden, und dass die Drahtgitterbahn (2) zusammen mit den Mineralwollematten (4, 6) zu einem als eine Rolle gewickeltem Gebinde zusammengefasst wird, wobei der Trennschnitt an einer Stirnseite (18) der Mineralwollematten (4, 6) in der Drahtgitterbahn (2) durchgeführt wird, so dass nur ein einseitiger vorstehender Überlappungsabschnitt für die vereinzelte Mineralwollematte (4, 6) gebildet wird.

14. Verfahren nach Anspruch 13,
**dadurch gekennzeichnet, dass**
die Rolle mit einer Kompression im Bereich von 1:2 bis 1:3, vorzugsweise 1:2,3 bis 1:2,7 gewickelt wird.

15. Verfahren nach einem der Ansprüche 13 oder 14,
**dadurch gekennzeichnet, dass**
eine Drahtgitterbahn (2) mit zwei bis acht, vorzugsweise vier bis sieben, Mineralwollematten (4, 6) zu einer Gebinderolle aufgewickelt wird.

## Revendications

1. Élément isolant en laine minérale en forme de natte (7, 9), comprenant une natte en laine minérale (4, 6) qui comporte un grillage de fil (2) sur au moins une surface principale de la natte en laine minérale (4, 6), dans lequel
l'élément en matière isolante (7, 9) comporte une natte en laine minérale (4 ou 6) réalisée à partir d'une pluralité de nattes en laine minérale (4, 6) qui sont individualisées et agencées sur au moins une bande de grillage de fil (2) avec un écartement (L) ou un espace entre des faces d'extrémité des nattes en laine minérale (4, 6), dans lequel les nattes en laine minérale (4, 6) sont reliées les unes aux autres par la bande de grillage de fil (2),
**caractérisé en ce que**
l'élément en matière isolante (7, 9) est formé par une découpe de séparation à travers la bande de grillage de fil (2) dans la portion de l'écartement (L), laquelle découpe de séparation est réalisée au niveau d'une face d'extrémité (18) des nattes en laine minérale (4, 6) dans la bande de grillage de fil (2) de sorte que seule une portion de chevauchement en saillie sur un côté est formée pour la natte en laine minérale (4, 6) individualisée.

2. Élément en matière isolante (7, 9) selon la revendication 1,
**caractérisé en ce que**
la natte en laine minérale (4, 6) est couverte sur toute sa surface par le grillage de fil (2) qui est avantageusement cousu conjointement avec la natte en laine minérale (4, 6).

3. Élément en matière isolante (7, 9) selon la revendication 1 ou 2,
**caractérisé en ce que**
la natte en laine minérale (4, 6) est pourvue sur un côté, ce qui signifie uniquement sur l'une de ses surfaces principales (8 ou 10), du grillage de fil (22), dans lequel la natte en laine minérale est avantageusement stratifiée avec une feuille d'aluminium (12) sur une surface pourvue du grillage du fil.

4. Élément en matière isolante (7, 9) selon l'une des revendications 1 à 3,
**caractérisé en ce que**
le surplomb de la portion de chevauchement en saillie est dans une plage de 25 à 200 mm, en particulier de 50 à 125 mm.

5. Élément en matière isolante (7, 9) selon l'une des revendications précédentes,
**caractérisé en ce que**
la natte en laine minérale (4 ou 6) a une épaisseur dans une plage de 20 à 120 mn, en particulier de 30 à 75 mm, avantageusement de 30 à 50 mm et/ou la longueur de la natte en laine minérale (4 ou 6) est dans une plage de 800 à 5000 mm, en particulier dans une plage de 800 à 1600 mm, et/ou la largeur de la natte en laine minérale (4 ou 6) est dans une plage de 50 à 120 mm, en particulier de 50 à 100 mm, avantageusement de 60 mm, et/ou une masse volumique brute de la natte en laine minérale (4, 6) est dans une plage de 20 à 100 kg/m³, en particulier de 30 à 80 kg/m³, avantageusement de 35 à 70 kg/m³, en particulier de 40, 48, 55 ou 66 kg/m³.

6. Emballage pour des éléments en matière isolante (7, 9) selon l'une des revendications 1 à 5,
**caractérisé en ce que**
l'emballage est configuré sous forme de rouleau et constitué d'une bande de matière isolante comprenant l'élément isolant en laine minérale en forme de natte (7, 9) selon l'une des revendications 1 à 5 et qui est configuré pour former des éléments en matière isolante individualisables (7, 9) en nattes en laine minérale (4, 6), dans lequel les nattes en laine minérale (4, 6) sont agencées avec des écartements (L) au niveau de leurs faces d'extrémité dans la bande en matière isolante et reliées les unes aux autres par au moins une bande de grillage de fil (2) qui est agencée avantageusement sur au moins l'une des deux surfaces principales (8, 10) des nattes en laine minérale (4, 6).

7. Emballage selon la revendication 6,
**caractérisé en ce que**
l'emballage comporte une stratification en feuille d'aluminium (12) entre les nattes en laine minérale (4, 6) individuelles et la bande de grillage de fil (2) est avantageusement cousue conjointement avec celle-ci, dans lequel une longueur de la feuille d'aluminium est soit continue correspondant à une longueur de la bande de grillage de fil (2) soit est dimensionnée et configurée respectivement en fonction d'une longueur de chaque natte en laine minérale (4, 6).

8. Emballage selon l'une des revendications 6 ou 7,
**caractérisé en ce que**
une longueur du rouleau enroulé est dans une plage de 5 m à 12 m, avantageusement de 6 à 7 m.

9. Emballage selon l'une des revendications 6 à 8,
**caractérisé en ce que**
une épaisseur des nattes en laine minérale (4, 6) est dans une plage de 20 à 120 mn, en particulier de 30 à 75 mm, avantageusement de 30 à 50 mm et/ou **en ce que** la longueur de la natte en laine minérale (4 ou 6) est dans une plage de 800 à 5000 mm, en particulier de 800 à 1600 mm, et/ou **en ce que** la largeur de la natte en laine minérale (4, 6) est dans une plage de 50 mm à 120 mm, en particulier de 50 mm à 100 mm, avantageusement de 60 mm, et **en ce que** la masse volumique brute est dans une plage de 20 à 100 kg/m³, en particulier de 30 à 80 kg/m³, avantageusement dans une plage de 35 à 70 kg/m³, dans lequel des masses volumiques brutes convenant particulièrement sont de 40, 48, 55 et 66 kg/m³.

10. Emballage selon l'une des revendications précédentes,
**caractérisé en ce que**
l'écartement (L) entre les nattes en laine minérale (4, 6) est dans une plage de 50 à 400 mm, avantageusement dans une plage de 100 à 250 mm.

11. Emballage selon l'une des revendications précédentes,
**caractérisé en ce que**
les nattes en laine minérale (4, 6) sont fournies en une quantité de deux à huit, en particulier de quatre à sept nattes sur une bande de grillage de fil (2).

12. Emballage selon l'une des revendications 6 à 11,
**caractérisé en ce que**
le rouleau est fourni avec une compression dans une plage de 1:2 à 1:3, avantageusement de 1:2,3 à 1:2,7.

13. Procédé de production d'un emballage selon l'une des revendications 6 à 12, considérant que les nattes en laine minérale (4, 6) sont découpées avec une longueur prédéterminée à partir d'une bande en laine minérale continue, les nattes en laine minérale (4, 6) sont individualisées et placées à une distance les unes des autres et agencées sur une bande de grillage de fil (2) et que les nattes en laine minérale (4, 6) agencées avec un écartement (L) entre chacune d'elles sont cousues conjointement avec la bande de grillage de fil (2) et que la bande de grillage de fil (2) conjointement avec les nattes en laine minérale (4, 6) sont combinées en un emballage configuré sous forme de rouleau, attendu que la découpe est réalisée au niveau d'une face d'extrémité (18) des nattes en laine minérale (4, 6) dans la bande de grillage de fil (2) de sorte que seule une portion de chevauchement en saillie sur un côté est formée pour la natte en laine minérale (4, 6) individualisée.

14. Procédé selon la revendication 13,
**caractérisé en ce que**
le rouleau est enroulé avec une compression dans une plage de 1:2 à 1:3, avantageusement de 1:2,3 à 1:2,7.

15. Procédé selon l'une des revendications 13 ou 14,
**caractérisé en ce que**
une bande de grillage de fil (2) avec deux à huit, avantageusement quatre à sept, nattes en laine minérale (4, 6) est enroulée en un rouleau d'emballage.
